# FASCICULE DE BREVET EUROPEEN

(11) **EP 2 324 324 B1**
(45) Date de publication et mention de la délivrance du brevet: **31.10.2012**
(21) Numéro de dépôt: 09740165.7
(22) Date de dépôt: 08.09.2009
(51) Int. Cl.: G01C 19/56

(54) **RESONATEUR POUR DETECTEUR DE PARAMETRE ANGULAIRE**
RESONATOR FÜR EINEN WINKELPARAMETERDETEKTOR
RESONATOR FOR AN ANGULAR PARAMETER DETECTOR

(30) Priorité: 16.09.2008 FR 0805054
(43) Date de publication de la demande: 25.05.2011
(73) Titulaire: Sagem Défense Sécurité, 75015 Paris (FR)
(72) Inventeur: VANDEBEUQUE, Paul, F-75015 Paris (FR); JEANROY, Alain, F-75015 Paris (FR)
(74) Mandataire: Lavialle, Bruno François Stéphane
(86) Numéro de dépôt international: PCT/FR2009/001069
(87) Numéro de publication internationale: WO 2010/031915

(56) Documents cités:
- EP-A1- 1 445 580
- US-B1- 7 281 426

## Description

La présente invention concerne un résonateur pour capteur vibrant de paramètre angulaire comme un gyroscope ou un gyromètre.

### ARRIERE PLAN DE L'INVENTION

Un résonateur de gyroscope ou de gyromètre comprend généralement une cloche hémisphérique pourvue d'un pied central fixé sur une pièce support de la cloche. La cloche est en matériau électriquement isolant et revêtue uniformément d'une couche conductrice électriquement pour définir, sur un bord périphérique de la cloche, des électrodes en regard d'électrodes d'une pièce support. Les électrodes sont alimentées pour provoquer une déformation en ellipse de la cloche et pour détecter l'orientation de l'ellipse. Le matériau utilisé pour la cloche est en général la silice qui par un amortissement intrinsèque très faible garantit la précision du capteur. La couche conductrice est elle généralement réalisée en métal mais présente l'inconvénient d'apporter d'une part un amortissement mécanique et d'autre part un amortissement électrique (occasionné par les pertes résistives produites lors de la circulation du courant de détection dans la couche conductrice au niveau de l'équateur) (voir p. ex. EP-A1-1445 580 et US-B1-7 281 426). La qualité du résonateur est donc grandement influencée par la couche conductrice. L'amortissement des vibrations oblige en outre à augmenter l'énergie nécessaire à leur entretien mais dégrade surtout les performances du résonateur en augmentant la dérive si le résonateur présente un défaut en harmonique géométrique d'ordre quatre.

### OBJET DE L'INVENTION

Un but de l'invention est de fournir un moyen pour améliorer la qualité de tels résonateurs.

### RESUME DE L'INVENTION

A cet effet, on prévoit, selon l'invention, un résonateur pour capteur de paramètre angulaire, comprenant une cloche en matériau isolant électriquement pourvue d'un pied central et une couche conductrice électriquement, la couche conductrice comprenant un nombre premier au moins égal à sept de branches s'étendant sensiblement depuis une portion centrale de la cloche jusqu'à un bord périphérique de la cloche.

Ainsi, la couche conductrice ne recouvre pas en totalité la portion de la cloche au voisinage du bord périphérique où les déformations sont les plus importantes et un amortissement de celles-ci le plus pénalisant alors que seule une continuité électrique est nécessaire pour amener le courant jusqu'aux électrodes formées sur le bord périphérique. L'utilisation d'un nombre premier de sept branches au minimum permet d'assurer une conduction suffisante du courant électrique tout en limitant l'influence de la couche conductrice sur le comportement mécanique de la cloche. En particulier, un tel nombre limite le risque que la couche conductrice donne naissance à des sous-harmoniques dans les premier, deuxième, troisième et quatrième ordres géométriques. Ceci permet également une plus grande tolérance aux défauts de fabrication et en particulier au défaut d'excentrement de la couche conductrice par rapport à la cloche.

De préférence, la couche conductrice comprend sept branches.

L'influence de la couche conductrice sur le comportement mécanique de la cloche est minimisée et la fabrication de la couche conductrice reste relativement aisée, notamment en ce qui concerne la réalisation du masque de dépôt de la couche conductrice.

Avantageusement, les branches ont une largeur telle qu'elles présentent une surface mesurée, au voisinage du bord périphérique de la cloche, sensiblement égale à un dixième de la surface de la cloche, également mesurée au voisinage du bord périphérique.

Ce mode de réalisation présente un bon compromis pour l'obtention de faibles amortissements mécanique et électrique tout en conservant une fabrication relativement aisée du résonateur. Au voisinage du pôle de la cloche, la couche conductrice couvre la quasi-totalité de la surface de la cloche mais sans pénaliser les performances du résonateur, l'amortissement au pôle de la cloche étant sans incidences sur celles-ci.

Selon une caractéristique particulière, la couche conductrice comprend une portion de recouvrement d'au moins une portion longitudinale du pied.

Ceci simplifie l'alimentation électrique du résonateur.

Selon d'autres caractéristiques particulières :
- les branches s'étendent sensiblement selon des méridiens de la cloche,
- les branches ont des bords longitudinaux parallèles ou convergeant vers le bord périphérique de la cloche,
- la couche conductrice est en métal, et, de préférence, le métal est le platine.

D'autres caractéristiques et avantages de l'invention ressortiront à la lecture de la description qui suit d'un mode réalisation non limitatif de l'invention.

### BREVE DESCRIPTION DES DESSINS

Il sera fait référence aux dessins annexés, parmi lesquels :
- la figure 1 est une vue en perspective d'un résonateur conforme à l'invention,
- la figure 2 est une vue de détail de la zone II de la figure 1,
- la figure 3 est une vue analogue à celle de la figure 2 d'une variante de réalisation.

### DESCRIPTION DETAILLEE DE L'INVENTION

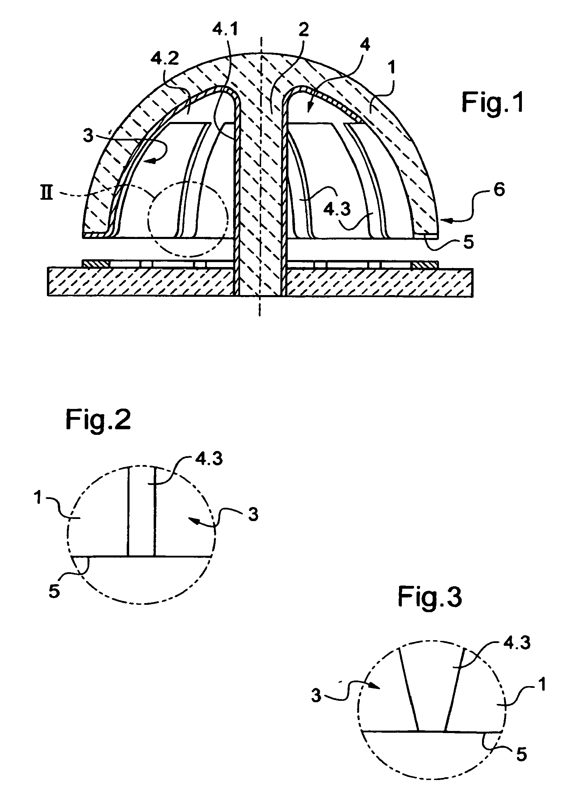

En référence aux figures 1 et 2, le résonateur de l'invention est ici destiné à être utilisé de façon connue en elle-même dans un capteur de paramètre angulaire comme un gyroscope ou un gyromètre qui sont des dispositifs connus en eux-mêmes dont ni la constitution ni le fonctionnement ne seront détaillés ici.

Le résonateur conforme à l'invention comprend une cloche 1, de forme hémisphérique, pourvue en son centre d'un pied 2 qui s'étend en saillie de la surface intérieure 3 de la cloche 1. La cloche 1 et le pied 2 sont réalisés en silice par usinage.

Le résonateur comprend une couche conductrice généralement désignée en 4 qui comprend une portion 4.1 de recouvrement du pied 2, une portion 4.2 centrale annulaire prolongeant la portion 4.1 en entourant la base du pied 2 et sept branches 4.3 s'étendant depuis la portion 4.2 jusqu'au bord périphérique 5 de la cloche 1. Les branches 4.3 s'étendent sensiblement selon des méridiens de la cloche 1 et ont ici des bords longitudinaux parallèles. Les branches ont une largeur telle qu'elles présentent, au voisinage du bord périphérique de la cloche, une surface totale sensiblement égale à un dixième de la surface de la cloche au voisinage du bord périphérique. La largeur de chaque branche est ici de 1 mm environ. La couche conductrice 4 a une épaisseur de 40 nm environ.

La couche conductrice 4 définit également des électrodes sur le bord périphérique 5 et peut éventuellement remonter sur la surface extérieure 6 de la cloche 1 au voisinage du bord périphérique 5.

En variante, comme représenté sur la figure 3, les branches 4.3 peuvent avoir des bords longitudinaux convergeant l'un vers l'autre en direction du bord périphérique 5 (la convergence est exagérée sur la figure 3).

Bien entendu, l'invention n'est pas limitée au mode de réalisation décrit mais englobe toute variante entrant dans le champ de l'invention telle que définie par les revendications.

En particulier, le nombre de branches est un nombre premier au moins égal à sept et peut être égal à onze ou treize notamment.

La couche conductrice peut ne pas comporter de portion centrale annulaire.

## Revendications

1. Résonateur pour capteur de paramètre angulaire, comprenant une cloche (1) en matériau isolant électriquement pourvue d'un pied central (2) et une couche conductrice électriquement (4), **caractérisé en ce que** la couche conductrice (4) comprend un nombre premier au moins égal à sept de branches (4.3) s'étendant depuis une portion centrale de la cloche (1) jusqu'à un bord périphérique de la cloche (1).

2. Résonateur selon la revendication 1, dans lequel la couche conductrice (4) comprend sept branches (4.3).

3. Résonateur selon la revendication 1, dans lequel les branches (4.3) ont une largeur telle qu'elles présentent, au voisinage du bord périphérique (5) de la cloche (1), une surface sensiblement égale à un dixième de la surface de la cloche (4) au voisinage du bord périphérique (5).

4. Résonateur selon la revendication 1, dans lequel la couche conductrice (4) comprend une portion de recouvrement d'au moins une portion longitudinale du pied.

5. Résonateur selon la revendication 1, dans lequel la couche conductrice (4) comprend une portion centrale annulaire (4.2).

6. Résonateur selon la revendication 1, dans lequel les branches (4.3) s'étendent sensiblement selon des méridiens de la cloche.

7. Résonateur selon la revendication 1, dans lequel les branches (4.3) ont des bords longitudinaux parallèles.

8. Résonateur selon la revendication 1, dans lequel les branches (4.3) ont des bords longitudinaux convergeant vers le bord périphérique de la cloche.

9. Résonateur selon la revendication 1, dans lequel la couche conductrice (4) est en métal.

10. Résonateur selon la revendication 1, dans lequel le métal est le platine.

## Claims

1. A resonator for an angular parameter sensor, the resonator comprising a bell (1) of electrically-insulating material provided with a central stem (2) and an electrically-conductive layer (4), the resonator being **characterized in that** the conductive layer (4) comprises branches (4.3) extending from a central portion of the bell to a peripheral edge of the bell (1), the number of said branches being a prime number not less than seven.

2. A resonator according to claim 1, wherein the conductive layer (4) comprises seven branches (4.3).

3. A resonator according to claim 1, wherein the branches (4.3) are of a width such that in the vicinity of the peripheral edge (5) of the bell (1) they present an area that is substantially equal to one-tenth of the area of the bell (1) in the vicinity of the peripheral edge (5).

4. A resonator according to claim 1, wherein the conductive layer (4) includes a portion covering at least a longitudinal portion of the stem.

5. A resonator according to claim 1, wherein the conductive layer (4) includes an annular central portion (4.2).

6. A resonator according to claim 1, wherein the branches (4.3) extend substantially along meridians of the bell (1).

7. A resonator according to claim 1, wherein the branches (4.3) have parallel longitudinal edges.

8. A resonator according to claim 1, wherein the branches (4.3) have longitudinal edges converging towards the peripheral edge of the bell.

9. A resonator according to claim 1, wherein the conductive layer (4) is made of metal.

10. A resonator according to claim 1, wherein the metal is platinum.

## Patentansprüche

1. Resonator für einen Sensor eines Winkelparameters, der eine Glocke (1) aus elektrisch isolierendem Material umfasst, die mit einem zentralen Fuß (2) und einer elektrisch leitenden Schicht (4) versehen ist, **dadurch gekennzeichnet, dass** die leitende Schicht (4) eine Primzahl von mindestens sieben Zweigen (4.3) umfasst, die sich von einem zentralen Abschnitt der Glocke (1) bis zu einem peripheren Rand der Glocke (1) erstrecken.

2. Resonator nach Anspruch 1, bei dem die leitende Schicht (4) sieben Zweige (4.3) umfasst.

3. Resonator nach Anspruch 1, bei dem die die Zweige (4.3) eine solche Breite haben, dass sie in der Umgebung des peripheren Randes (5) der Glocke (1) eine Oberfläche haben, die in etwa einem Zehntel der Oberfläche der Glocke (1) in der Umgebung des peripheren Randes entspricht (5).

4. Resonator nach Anspruch 1, bei dem die leitende Schicht (4) einen Abschnitt zur Abdeckung für mindestens einen Längsabschnitt des Fußes umfasst.

5. Resonator nach Anspruch 1, bei dem die leitende Schicht (4) einen zentralen ringförmigen Abschnitt (4.2) umfasst.

6. Resonator nach Anspruch 1, bei dem sich die Zweige (4.3) in etwa entlang der Meridiane der Glocke erstrecken.

7. Resonator nach Anspruch 1, bei dem die Zweige (4.3) parallele Längskanten haben.

8. Resonator nach Anspruch 1, bei dem die Zweige (4.3) Längskanten haben, die in Richtung des peripheren Randes der Glocke konvergieren.

9. Resonator nach Anspruch 1, bei dem die leitende Schicht (4) aus Metall ist.

10. Resonator nach Anspruch 1, bei dem das Metall Platin ist.
